# EUROPÄISCHE PATENTSCHRIFT

(11) **EP 0 652 186 B1**
(45) Veröffentlichungstag und Bekanntmachung des Hinweises auf die Patenterteilung: **09.10.1996**
(21) Anmeldenummer: 94112606.2
(22) Anmeldetag: 12.08.1994
(51) Int. Cl.: C03B 40/00, C03C 14/00

(54) **Verwendung eines temperaturbeständigen Werkstoffs insbesondere als Asbestersatz an Einrichtungen zum Handhaben von heissen Glasgegenständen**
Use of a temperature-resistant material, in particular as an asbestos substitute in apparatus for handling hot glassarticles
Utilisation d'un matériau résistant aux températures élevées en particulier comme amiante de rechange dans des dispositifs de manipulation d'articles chauds en verre

(30) Priorität: 10.11.1993 DE 4338270
(43) Veröffentlichungstag der Anmeldung: 10.05.1995
(73) Patentinhaber: Schott Glaswerke, 55122 Mainz (DE); WESTERWALD GLASSTEIN GmbH, D-56422 Wirges (DE); Carl-Zeiss-Stiftung trading as SCHOTT GLASWERKE, 55122 Mainz (DE)
(72) Erfinder: Beier, Wolfram, Dr., D-55276 Klein Winternheim (DE); Franek, Henning, Dr., D-35619 Braunfels (DE); Heinz, Jochen, Dr., D-55576 Sprendlingen (DE); Bohr, Dirk, D-56424 Staudt (DE)

(56) Entgegenhaltungen:
- DE-A- 3 644 063
- FR-A- 2 135 122
- JOURNAL OF MATERIALS SCIENCE, Bd.24, Nr.12, Dezember 1989, LONDON GB Seiten 4177 - 4208 I.W.DONALD 'methods for improving the mechanical properties of oxide glasses'

## Beschreibung

Bei der Herstellung von Glasgegenständen ist es vielfach erforderlich, heiße Produkte oder heiße Halbzeuge, die eine Temperatur zwischen 200 und 1000°C besitzen, zu handhaben oder zu verarbeiten. Die heißen Produkte oder Halbzeuge haben dabei eine Temperatur von mehr als 200°C,üblicherweise von 300 bis 700°C, je nach dem verarbeiteten Glastyp und dem jeweiligen Produktionsschritt. Die Einrichtungen, in bzw. mit denen diese Handhabung vorgenommen wird, sind vornehmlich Transport-, Handlings- und Verarbeitungsmaschinen, dazu gehören Preß-, Verformungs-, Positionierungs-, Umsetz- und Entnahmemaschinen bzw. Bauteile dieser Maschinen, die mit dem heißen Glasgegenstand in Kontakt kommen, also z.B. Greifer, Pusher, Schieber, Wender, Absetzplatten, Gleit-und Anlaufschienen, Gleitstücke, Förderbandsegmente, Umlenkrollen, Transportrollen, Abstreifer, Einschiebebalken, Umlenker, Greiferklauen, Einsätze, Kühlofeneinschieber, Auflagen für Transporteinrichtungen, Positionierlehren, Formen oder Formenteile, Messer usw.

Häufig bestehen die Bauteile nicht vollständig aus dem temperaturbeständigen Werkstoff, sondern nur die eigentlichen Kontaktbereiche, bei denen eine kombinierte thermo-tribo-mechanische Beanspruchung auftritt.

Bisher wurden für derartige Heißhandling-Anwendungen an vielen Stellen in erster Linie Asbest oder asbesthaltige Werkstoffe eingesetzt. Aufgrund der von Asbest ausgehenden Gesundheitsgefährdung wird der Einsatz von Asbest immer stärker eingeschränkt und es kommen schon heute weitgehend Asbestersatzstoffe zum Einsatz.
Alle bekannten Asbestersatzstoffe haben jedoch einen oder mehrere spezifische Nachteile.

Herkömmliche Keramikfasermaterialien unterliegen einem hohen Verschleiß, d.h. sie haben nur eine geringe Standzeit, was zu hohen Umrüstkosten führt. Sie setzen Faserabrieb frei, dadurch werden Anlagen und Werkhallen kontaminiert, und Sensoren können gestört werden, darüber hinaus absorbiert der abgesetzte Faserabrieb Schmierölnebel aus der Luft, was infolge seiner großen Oberfläche zu einem erhöhten Brandrisiko führt.

Massive, monolithische Keramik neigt zu Sprödbruch insbesondere bei Stoß- und Schlagbeanspruchung, aber auch bei langsam aufgebrachter Spannung wie bei einer Verschraubung und sie besitzt nur eine geringe Thermoschockbeständigkeit und eine schlechte Fügbarkeit, z.B: beim Verschrauben mit Maschinenteilen aus Stahl.

Graphit unterliegt einem hohen Verschleiß, was zu hohen Umrüstkosten führt, neigt ebenfalls zu Sprödbruch bei Stoß- und Schlagbeanspruchung, besitzt ebenfalls eine schlechte Fügbarkeit, besitzt eine hohe Wärmeleitfähigkeit, was beim Heißglashandling leicht zu sogenannten Schränkungsrissen führt und neigt zu Oxidation in heißer oxidierender Atmosphäre. Außerdem ist Graphit oft auch zu glatt zum Greifen heißen Glases.

Metalle und Legierungen besitzen ein hohes spezifisches Gewicht, was insbesondere bei hohen Taktfrequenzen (Beschleunigungen) zu erhöhtem Energiebedarf führt, sie besitzen eine hohe Wärmeleitfähigkeit, was leicht zu Schränkungsrissen führt, und können Metallabrieb hinterlassen, was sofort zu Ausschuß in der Produktion führt oder indirekt zu Ausschuß führt, da Metallspuren auf heißem Glas Risse induzieren.

Kunststoffe, z.B. solche auf Fluorcarbonharz - oder Polyimidbasis besitzen nur eine mangelhafte thermische Stabilität, sie verformen sich bei zu hoher thermischer Belastung unkontrollierbar und können darüberhinaus aggressive oder gesundheitsschädliche Gase freisetzen, die die Glasprodukte kontaminieren. Diese Kontamination kann dazu führen, daß die Glasprodukte nicht mehr bedruckbar sind.

Metalle und Keramiken besitzen darüber hinaus in Kontakt mit heißem Glas sehr hohe Reibbeiwerte, so daß es oft nötig ist, reichlich Schmieröl oder Festschmierstoffe einzusetzen. Diese Schmierstoffe verteilen sich z.B. durch Verdampfen in der Fabrik und müssen mit hohem Personalaufwand regelmäßig entfernt werden, um die Unfallgefahr durch Ausgleiten auf Boden und Treppen gering zu halten.

DE-A-3 644 063 beschreibt eine Formmasse, hergestellt aus Quarzsand (Quarzmehl), Bindemittel, Benetzungsmittel und Wasser, die als Gußform verwendet wird und die als Verstärkungselemente Keramikfasern enthalten kann.

Die Aufgabe der Erfindung besteht daher darin, einen Werkstoff insbesondere als Asbestersatz an Einrichtungen zum Handhaben von heißen Glasgegenständen zu finden, der mechanisch stabil ist, eine gute Fügbarkeit und Thermoschockbeständigkeit, eine hohe Verschleißfestigkeit und lange Standzeit sowie, eine ausreichend geringe Wärmeleitfähigkeit besitzt, keine Spuren am Glasgegenstand hinterläßt und wenig oder kein Schmiermittel benötigt.

Diese Aufgabe wird durch den Patentanspruch 1 gelöst.

Überraschenderweise hat sich gezeigt, daß faserverstärktes Glas bzw. faserverstärkte Glaskeramik Asbest in vielen Anwendungen im Bereich des Heißhandlings von Glas ersetzen kann und ihm sogar in einigen Eigenschaften überlegen ist.

Bei dem Heißhandling von Glas haben die heißen Glasgegenstände, die mit dem faserverstärken Glas bzw. Glaskeramik in Kontakt kommen, Temperaturen von 200 bis 1000 zu °C, im allgemeinen,z.B. bei der Herstellung von Gebrauchsglasgegenständen aus Kalknatronglas oder Kristallglas von 300 bis 700°C. Die Temperatur der Glasgegenstände beim Handling ist unmittelbar nach dem Formprozess am höchsten, z.B. bei der Entnahme aus der Formstation und nimmt im weiteren Verlauf des Handlings im allgemeinen ab.Es ist selbstverständlich, daß bei den Temperaturen, bei denen die heißen Glasgegenstände gehandhabt werden, der faserverstärkte Glaswerkstoff nicht schmelzen oder zu stark erweichen darf.
Prinzipiell kann jedes Glas mit keramischen Fasern verstärkt werden. Um aber innere Spannungen möglichst zu reduzieren bzw. ganz zu vermeiden, ist es sinnvoll, eine gewisse Anpassung der thermischen Ausdehnungskoeffizienten anzustreben. Da Kohlenstoff- und Siliciumcarbidfasern kleine Wärmedehnungen aufweisen, werden Gläser als Matrix bevorzugt, deren Wärmeausdehnung unter 10 ppm/K liegt.

Ganz besonders vorteilhaft sind Gläser mit Wärmedehnungen unter 5 ppm/K. Auch der T_{g}-Wert des Glases sollte zumindest grob auf die angestrebte Einsatztemperatur des Komposits abgestimmt sein, d.h. es sollte kein Glas mit zu niedriger Glasübergangstemperatur gewählt werden.

Überraschenderweise hat sich aber gezeigt, daß faserverstärkte Gläser auch bei Temperaturen mit Erfolg eingesetzt werden können, die oberhalb des T_{g}-Wertes der Glasmatrix liegen. Ein Beispiel dafür sind Komposite mit einer Matrix aus dem Borosilikatglas Duran (T_{g}:ca. 530°C), die u.U. bis 700°C eingesetzt werden können.

Natürlich hängt die maximal zulässige Temperatur von der Kontaktzeit und der bei der jeweiligen Anwendung tolerierten Verformung ab. Auf jeden Fall liegen eventuelle Verformungen der faserverstärkten Gläser auch bei hohen Temperaturen immer erheblich unter denen der unverstärkten Gläser, wie entsprechende Kriechversuche gezeigt haben.

Es empfiehlt sich allerdings, aus Rationalisierungsgründen von vornherein für die Matrix solche Gläser auszusuchen, die von vornherein einen so hohen T_{g} besitzten, daß sie praktisch allen Anforderungen gerecht werden. Als besonders geeignete Matrixgläser haben sich Borosilikatgläser erwiesen, deren bekannteste Vertreter unter den Bezeichnungen Duran^{R} oder Pyrex^{R} im Handel sind. Diese Gläser haben eine Zusammensetzung (in Gew.%) von etwa 70-80 SiO₂, 7-13 B₂O₃, 4-8 Alkalioxid und 2-7 Al₂O₃ und einen T_{g} von etwa 500-600°C.

Für noch höhere Temperaturbelastungen bieten sich hochtemperaturbeständige Gläser an, wie sie z.B. in der Elektrotechnik oder im Lampenbau Verwendung finden, insbesondere die alkalifreien oder alkaliarmen Aluminosilikat- oder Aluminophosphosilikatgläser, z.B. der Zusammensetzung (in Gew.%) von etwa 50-55 SiO₂, 20-25 Al₂O₃, 10-20 Erdalkalioxide, 5-10 P₂O₅, 0-5 B₂O₃, 0-0.5 Alkalioxide oder der Zusammensetzung 50-55 SiO₂, 8-12 B₂O₃, 10-20 Erdalkalioxide, 20-25 Al₂O₃. Diese Gläser besitzen einen T_{g} im Bereich von etwa 650-750.

Glaskeramiken, die seit ca. 1957 im Handel erhältlich sind, besitzen als Matrix eine noch höhere Temperaturbelastbarkeit. Geeignete Stoffsysteme sind z.B. Li₂O-Al₂O₃-SiO₂, MgO-Al₂O₃-SiO₂ oder CaO-Al₂O₃-SiO₂, die durch Zusätze in vielfältiger Weise modifiziert werden können. Glaskeramik und ihre Herstellung durch gesteuerte Kristallisation sind dem Fachmann seit Jahrzehnten bekannt und in zahlreichen Veröffentlichungen, z.B. W.Vogel, Glaschemie, Springer Verlag, Berlin 1992, Seiten 319-410, beschrieben.

Wegen ihrer guten mechanischen Bearbeitbarkeit sind auch Glaskeramiken, die Glimmer als Kristallphase (z.B. Phlogopit-Typ) enthalten, geeignet.

Verstärkungsfasern für Glas und Glaskeramik sind dem Fachmann wohl bekannt und für den vorliegenden Zweck sind alle anorganischen Verstärkungsfasern geeignet. Hauptsächlich Verwendung finden Fasern aus Kohlenstoff, SiC, Si₃N₄, Al₂O₃, ZrO₂ und/oder Mullit als Hauptkomponenten, gegebenenfalls mit Zusätzen von Si, Ti, Zr, Al, O, C, N z.B. Fasern des Sialon-Typs (Si, Al, O, N). Besonders geeignet sind Kohlenstoff- und Siliciumcarbidfasern.

Die Herstellung von faserverstärktem Glas bzw. faserverstärkter Glaskeramik ist dem Fachmann wohlbekannt und in zahlreichen Veröffentlichungen beschrieben, von denen exemplarisch nur die US-Patente Nr. 4610917, 4626515 und 5079196 aufgeführt werden.

Generell können durch gezielte Wahl von Matrix und Faser Komposite auf den vorgesehenen Einsatzzweck hin maßgeschneidert werden. Viele physikalische Eigenschaften wie thermische Ausdehnung, Wärmeleitung, Kriechverhalten bei thermischer Belastung, tribologisches Verhalten usw. sind in weiten Grenzen variierbar und einstellbar.

Die im Komposit eingebauten Fasern können in vielfältiger Weise variiert werden und zwar nicht nur im Hinblick auf die chemische Zusammensetzung, sondern auch im Hinblick auf das Mikrogefüge sowie die äußere Geometrie.

Das Mikrogefüge der Fasern bestimmt (bei gleicher chemischer Zusammensetzung) die physikalischen Eigenschaften. So gibt es z.B. bei C-Fasern spezielle Hochmodul- und Hochfestfasern, deren unterschiedlicher Graphitisierungsgrad das tribologische und thermische Verhalten beeinflußt. Somit besteht bei Verwendung der gleichen Verstärkungsfasern in begrenztem Umfang eine Variationsmöglichkeit aufgrund derer das Verbundmaterial auf die gewünschten Eigenschaften hin optimiert werden kann.

Besonders vielfältige Variationsmöglichkeiten bietet die Geometrie (Form und Abmessungen) der Verstärkungsfasern und die Anordnung der Fasern im Komposit.

So können die Gläser und Glaskeramiken mit Whiskern, Kurzfasern, Langfasern oder Endlosfasern verstärkt werden, weitere Möglichkeiten bestehen bei der Verwendung von Fasermatten, Fasergeweben sowie in der Verwendung von Faserfilz. Darüberhinaus kann der Faserverlauf im Werkstoff der Geometrie des aus dem Werkstoff hergestellten Bauteils angepaßt werden, indem z.B. durch Wickeln zirkuläre oder anders geformte Ringstrukturen oder ringförmige Bauteile erzeugt werden.

Whisker und Kurzfasern (bis ca. 5 mm Faserlänge) sind meist isotrop im Komposit verteilt, was zu isotropen Eigenschaften führt, sie können aber auch, z.B. durch Strangpressen bei erhöhter Temperatur partiell ausgerichtet werden. Sehr hohe Bruchzähigkeiten sind mit Whiskern oder Kurzfasern nicht zu erzielen. Lang- und Endlosfasern sind dagegen, zumindest in größeren Partien des Komposits, parallel angeordnet, was eine erhebliche Verbesserung der mechanischen Eigenschaften des Komposits in dieser Richtung, aber kaum eine Verbesserung senkrecht dazu bewirkt. Jedoch kann auch bei Verwendung von Lang- und Endlosfasern durch einen Laminataufbau, bei dem die Fasern winklig zueinander angeordnet sind, eine weitgehende Isotropierung, zumindest bezüglich einer Ebene, erreicht werden.

Generell ist die Kompositherstellung und -formgebung mit Lang- oder Endlosfasern schwieriger als mit Whiskern und Kurzfasern, sie ermöglicht aber dafür die Erzielung von besonders guten mechanischen Werten in Vorzugsrichtungen. Durch die richtige Wahl der Faserarchitektur können Bauteile entwickelt werden, die an die zu erwartende Belastung angepaßt sind. Wie die Faserarchitektur bei faserverstärkten Bauteilen gestaltet werden muß, ist dem Fachmann, z.B. von faserverstärkten Kunststoffbauteilen, bekannt.

Die Verwendung von Faserfilz und Fasergewebe führt zu Kompositwerkstoffen, die zwar im Vergleich zu Lang- oder Endlosfaserkompositwerkstoffen nur mittelmäßige Fertigkeitswerte aufweisen, die aber dafür mit kostengünstigen Techniken produziert werden können. So können Gewebe und Filz beispielsweise auch mit Glasschmelzen oder mit Sol-Gel-Lösungen, die durch eine anschließende Wärmebehandlung in Glas oder Glaskeramik umgewandelt werden können, infiltriert werden.

Wie die Werkstoffe für den speziellen Einsatzzweck hergestellt werden, d.h. ob mit Whiskern, Endlos-, Lang-, Kurzfasern, Gewebe, Filz usw. richtet sich nach den physikalischen und technischen Anforderungen, also etwa danach, ob bestimmte Eigenschaften isotrop oder anisotrop eingestellt werden sollen und selbstverständlich nach den bei der Herstellung des Werkstoffes auftretenden Kosten, die den Preis des Werkstoffs und damit seine Wirtschaftlichkeit bestimmen.

Die Eigenschaften des Werkstoffes werden durch die Eigenschaften seiner Bestandteile bestimmt. Somit ist durch richtige Wahl von Matrixglas/-glaskeramik und Faser ein "Maßschneidern" auf den jeweiligen Anwendungszweck hin möglich.

Für Anwendungen an Luft bis etwa 500°C (Temperatur des heißen Glasgegenstands) ist ein kohlenstoffaserverstärkter Werkstoff geeignet (abhängig von der tatsächlichen Belastungsdauer und -frequenz sowie weiteren Parametern, wie der Forderung nach geringer Gleitreibung im Trockenlauf), für Anwendungen bei höheren Temperaturen müssen im allgemeinen oxidationsbeständige Fasern verwendet werden, z.B. die teuereren SiC-Fasern. Unter inerten oder reduzierenden Bedingungen halten Kohlenstoffasern dagegen auch extremen Temperaturen stand.

Bei Verwendung mehrere unterschiedlicher Fasersorten lassen sich sogenannte Hybridkomposite herstellen, die für bestimmte Heißhandlingsaufgaben optimiert sind. Sie können z.B. für Greifer auf ein bestimmtes Haft- bzw. Reibungsverhalten optimiert sein, um sichere Greifvorgänge bei hohen Temperaturen zu gewährleisten. Werkstoffe mit verhältnismäßig hoher Reibung erhält man durch einen hohen Faseranteil an SiC-Fasern. Es kann aber auch erwünscht sein, z.B. bei Schiebern oder Gleitstücken eine möglichst geringe Reibung zwischen Glasgegenstand und Werkstoff zu haben. In diesem Fall soll das Komposit Fasern mit niedrigem Reibungskoeffizienten besitzen, z.B. Kohlenstoffasern, insbesondere solche mit höheren Graphitisierungsgrad.

Besonders vorteilhaft sind Komposite, die sowohl SiC- als auch C-Fasern enthalten. Erste gewährleisten eine hohe Grundfestigkeit und niedrigen Verschleiß in heißem Zustand und letztere bewirken eine gewisse Selbstschmierung.
Der Faseranteil in dem Kompositwerkstoff liegt bei etwa 10 bis 70 Vol.-%. Einen höheren Füllungsgrad erreicht man nur mit erheblichen Kosten; sinkt der Anteil an Fasern in dem Komposit unter 20 Vol.-%, so fällt die erzielbare Festigkeitssteigerung drastisch geringer aus, und außerdem wird eine gleichmäßige Verteilung der Fasern in der Glas-/Glaskeramikmatrix sehr erschwert. Aus ökonomischen Gründen wird ein Faseranteil von etwa 30 bis 40 Vol.-% bevorzugt. Bei Verwendung unterschiedlicher Fasersorten richtet man sich nach den gewünschten Eigenschaften der Komposits. Verwendet man ein Gemisch aus SiC- und C-Fasern, so liegt das Vol.-Verhältnis der beiden Fasersorten in dem Komposit zwischen 1: 20 und 1: 0,05, je nachdem ob man größeren Wert auf eine hohe oder geringe Reibung zwischen Komposit und heißem Glasartikel legt.

Es ist weiterhin möglich, den faserverstärkten Glas- bzw. Glaskeramikwerkstoff porös, sei es durch unvollständige Verdichtung oder durch Freisetzung gasförmiger Komponenten während der Herstellung, herzustellen. Durch die Porosität verändern sich die thermische Leitfähigkeit, der Elastizitätsmodul und die Aufnahmefähigkeit für Schmiermittel.

Der faserverstärkte Werkstoff kann zur Anfertigung kompletter Werkzeugteile dienen, im allgemeinen ist es jedoch ausreichend und ökonomischer, wenn das Werkzeugteil nach wie vor aus Metall besteht und nur an den mit den heißen Glasgegenständen in Berührung kommenden Stellen mit einer Auflage aus dem Werkstoff versehen ist. Infolge der guten mechanischen Bearbeitbarkeit des Werkstoffes durch Sägen, Bohren und Fräsen, bei glimmerhaltigen Werkstoffen (Phogopit-Typ) auch Drehen, läßt er sich sehr gut an Stahlteile fügen, insbesondere verschrauben, z.B. als Platten, Stangen, Leisten, auch gebogen, gewinkelt, als runde Scheibe usw.

Faserverstärktes Glas bzw. faserverstärkte Glaskeramik ist für alle Einrichtungen zum Handhaben von heißen Glasgegeständen als Kontaktmaterial für die Stellen geeignet, die mit den heißen Glasgegeständen in Berührung kommen. Er ist für diesen Zweck dem bisher benutzten Asbest gleichwertig bzw. überlegen und übertrifft die bisher bekannten Asbest-Ersatzstoffe bei weitem.

Er läßt sich auch verwenden als Material zur Formgebung heißer Glasgegenstände und Glasschmelzposten, z.B. zum Anbringen von Ausgießnasen an Bechergläsern oder Kaffeetöpfen.

### Beispiele

Es wurde eine Leiste aus faserverstärktem Glas mit den Abmessungen 45 x 25 mm und einer Dicke von 7 mm mit halbkreisförmigem Ausschnitt als Kontaktstück (Einsatz) an eine Greiferklaue zur Handhabung von Glasbausteinen angeschraubt. Das faserverstärkte Glas bestand aus einer Borosilikatglasmatrix (Duran^{R}), die 30 Vol.-% SiC-Endlosfaser enthielt. Die Fasern waren in 25 Tapes angeordnet, in denen die Fasern jeweils in einem Winkel von 90° im Vergleich zur vorhergehenden Lage angeordnet waren. Die zu handhabenden Glasbausteine hatten eine Temperatur von ca. 550°C. Es ergaben sich Standzeiten für das Kontaktstück, die 3 mal höher lagen als die für den früher benutzten Asbest und 30 mal höher lagen als für das derzeit benutzte Asbestersatzmaterial (Aluminosilikatfasermaterial).

Ferner wurden 10 x 10 x 8 mm große (Länge x Breite x Dicke) Kontaktstücke aus dem gleichen Material als Auflagestücke für ca. 550°C heiße Glasbausteine eingesetzt. Es ergaben sich Standzeiten, die 3 mal höher als die von Asbest waren.

Eine Positionierungs- und Handhabungseinrichtung für Glasbausteine, in der der Glasbaustein mittels 4 Leisten gehalten und positioniert wird (Palette) wurde mit 130 x 25x 8 mm großen Kontaktleisten der oben beschriebenen Zusammensetzung durch Verschrauben versehen. Die Standzeit dieser Palettenleisten entsprach etwa der von Asbestleisten. Bei der Verwendung von Kohlenstoffasern anstelle der SiC-Fasern für die Palettenleisten ergab sich gegenüber Asbestleisten eine leicht verbesserte Standzeit. Die Leistungen des erfindungsgemäßen Werkstoffs sind deswegen besonders bemerkenswert, da für Auflagestücke und Palettenleisten bisher kein wirklich brauchbarer Asbestersatz gefunden werden konnte.

Die als Ersatz vorgeschlagenen Materialien wie Kohlenstoff- oder Graphitleisten oder faserverstärkte Zemente sind aus den verschiedesten Gründen (Sprödigkeit, mangelnde Fügbarkeit, mangelnde Stoßfestigkeit, mangelnde Abriebfestigkeit) einem so hohen Verschleiß ausgesetzt, daß bei erschwerten Produktionsbedingungen bisher noch der Einsatz von Asbestmaterialien an einzelnen Stellen unverzichtbar war. Der erfindungsgemäße Werkstoff stellt einen dem Asbest wenigstens gleichwertigen Ersatz dar, der praktisch überall Verwendung finden kann; es ist daher auch nicht mehr nötig, eine Vielzahl von Asbestersatzstoffen für die unterschiedlichen Einsatzzwecke auf Lager zu halten.

Der Abrieb von faserverstärktem Glas bzw. faserverstärkter Glaskeramik Werkstoffes ist nur gering und weist die Nachteile, die die bisher als Asbestersatz verwendeten Fasermaterialien besitzen, nicht auf.

## Patentansprüche

1. Verwendung eines faserverstärkten Glases oder einer faserverstärkten Glaskeramik als temperaturbeständiger Werkstoff an Einrichtungen zum Handhaben von heißen Glas-, Glaskeramik- und Keramikgegenständen, insbesondere als Asbestersatz.

2. Verwendung eines faserverstärkten Glases nach Anspruch 1,
**dadurch gekennzeichnet,**
daß die Glasmatrix aus Borosilikatglas, Aluminosilikatglas oder hoch SiO₂-haltigem Glas besteht.

3. Verwendung einer faserverstärkten Glaskeramik nach Anspruch 1,
**dadurch gekennzeichnet,**
daß die Glaskeramikmatrix aus einer Glaskeramik aus dem System Li₂O-Al₂O₃-SiO₂, MgO-Al₂O₃-SiO₂ oder CaO-Al₂O₃-SiO₂ besteht.

4. Verwendung einer faserverstärkten Glaskeramik nach Anspruch 1,
**dadurch gekennzeichnet,**
daß die Glaskeramikmatrix aus einer Glaskeramik mit Glimmer als Kristallphase des Phlogopit-Typs besteht.

5. Verwendung eines faserverstärkten Glases oder einer faserverstärkten Glaskeramik nach wenigstens einem der Ansprüche 1 bis 4,
**dadurch gekennzeichnet,**
daß die Verstärkungsfasern aus Kohlenstoff, Siliciumcarbid, Si₃N₄, Al₂O₃, ZrO₂, Mullit als Hauptkomponenten, gegebenenfalls mit Zusätzen von Si, Ti, Zr, Al, bestehen.

6. Verwendung eines faserverstärkten Glases oder einer faserverstärkten Glaskeramik nach wenigstens einem der Ansprüche 1 bis 4,
**dadurch gekennzeichnet,**
daß die Verstärkungsfasern aus Kohlenstoff und/oder SiC bestehen.

7. Verwendung eines faserverstärkten Glases oder einer faserverstärkten Glaskeramik nach wenigstens einem der Ansprüche 1 bis 6,
**gekennzeichnet durch**
einen Fasergehalt von 10 bis 70 Vol(%)

8. Verwendung eines faserverstärkten Glases oder einer faserverstärkten Glaskeramik nach wenigstens einem der Ansprüche 1 bis 7 für Greifer, Pusher, Schieber, Wender, Absetzplatten, Gleitschienen, Gleitstücke, Förderbandsegmente, Transportrollen, Abstreifer, Einschiebebalken, Umlenker, Greiferklauen-Einsätze, Kühlofeneinschieber, Auflagen für Scherenteile, Transporteinrichtungen, Positionierlehren, Formen oder Formteile, Messer, Umlenkrollen oder Teile davon, bei Einrichtungen zum Handhaben von heißen Glas-, Glaskeramik- oder Keramikgegenständen.

9. Verwendung eines faserverstärkten Glases oder einer faserverstärkten Glaskeramik nach wenigstens einem der Ansprüche 1 bis 7 zur Verformung oder Formgebung heißer Glasgegenstände bzw. Glasschmelzposten.

## Claims

1. Use of a fibre-reinforced glass or of a fibre-reinforced glass ceramic as temperature resistant material on devices for handling hot glass, glass-ceramic and ceramic objects, in particular as asbestos replacement.

2. Use of a fibre-reinforced glass according to Claim 1, characterized in that the glass matrix is composed of borosilicate glass, aluminosilicate glass or glass with a high SiO₂ content.

3. Use of a fibre-reinforced glass ceramic according to Claim 1, characterized in that the glass-ceramic matrix is composed of a glass ceramic selected from the Li₂O/Al₂O₃/SiO₂, MgO/Al₂O₃/SiO₂ or CaO/Al₂O₃/SiO₂ system.

4. Use of a fibre-reinforced glass ceramic according to Claim 1, characterized in that the glass-ceramic matrix is composed of a glass ceramic having mica of the phlogopite type as crystal phase.

5. Use of a fibre-reinforced glass or of a fibre-reinforced glass ceramic according to at least one of Claims 1 to 4, characterized in that the reinforcement fibres are composed of carbon, silicon carbide, Si₃N₄, Al₂O₃, ZrO₂, mullite as main components, optionally with additions of Si, Ti, Zr, Al.

6. Use of a fibre-reinforced glass or of a fibre-reinforced glass ceramic according to at least one of Claims 1 to 4, characterized in that the reinforcement fibres are composed of carbon and/or SiC.

7. Use of a fibre-reinforced glass or of a fibre-reinforced glass ceramic according to at least one of Claims 1 to 6, characterized by a fibre content of 10 to 70% by volume.

8. Use of a fibre-reinforced glass or of a fibre-reinforced glass ceramic according to at least one of Claims 1 to 7 for grippers, pushers, sliders, turners, resting plates, sliding rails, sliding parts, conveyor-belt segments, transport rollers, scrapers, extending bars, deflectors, gripper claw inserts, lehr inserters, rests for shear parts, transportation devices, positioning gauges, moulds or mould parts, knives, deflection rollers or parts thereof, in devices for handling hot glass, glass-ceramic or ceramic objects.

9. Use of a fibre-reinforced glass or of a fibre-reinforced glass ceramic according to at least one of Claims 1 to 7 for the deforming or shaping of hot glass objects or glass gathers.

## Revendications

1. Utilisation d'un verre renforcé par fibres ou d'une vitrocéramique renforcée par fibres comme matériau résistant aux températures élevées dans des dispositifs de manipulation d'articles chauds en verre, en vitrocéramique et en céramique.

2. Utilisation d'un verre renforcé par fibres selon la revendication 1, caractérisée par le fait que le verre formant la matrice est du verre de borosilicates, du verre d'alumino-silicates ou du verre à teneur élevée en SiO₂.

3. Utilisation d'une vitrocéramique renforcée par fibres selon la revendication 1, caractérisée par le fait que la vitrocéramique formant la matrice est une vitrocéramique appartenant au système Li₂O-Al₂O₃-SiO₂, MgO-Al₂O₃-SiO₂, ou CaO-Al₂O₃-SiO₂.

4. Utilisation d'une vitrocéramique renforcée par fibres selon la revendication 1, caractérisée par le fait que la vitrocéramique formant la matrice est une vitrocéramique contenant du mica (type phlogopite) comme phase cristalline.

5. Utilisation d'un verre renforcé par fibres ou d'une vitrocéramique renforcée par fibres selon au moins une des revendications 1 à 4, caractérisée par le fait que les fibres de renfort sont formées de carbone, de carbure de silicium, de Si₃N₄, d'Al₂O₃, de ZrO₂, de mullite comme composants principaux, éventuellement avec des additions de Si, Ti, Zr, Al.

6. Utilisation d'un verre renforcé par fibres ou d'une vitrocéramique renforcée par fibres selon au moins une des revendications 1 à 4, caractérisée par le fait que les fibres de renfort sont formées de carbone et/ou de SiC.

7. Utilisation d'un verre renforcé par fibres ou d'une vitrocéramique renforcée par fibres selon au moins une des revendications 1 à 6, caractérisée par une teneur en fibres comprise entre 10 et 70 pourcents du volume.

8. Utilisation d'un verre renforcé par fibres ou d'une vitrocéramique renforcée par fibres selon au moins une des revendications 1 à 7, pour des pinces, des râteaux-poussoirs, des poussoirs, des dispositifs de retournement, des plaques de démoulage ou d'attente, des rails de glissières, des coulisseaux, des segments de bande transporteuse, des galets de transport, des racles, des tiges de poussage, des déflecteurs, des garnitures de mâchoires de pinces, des enfourneurs de four de refroidissement, des supports d'éléments de cisailles, des dispositifs de transport, des gabarits de positionnement, des moules ou des éléments de moules, des couteaux, des galets de renvoi ou des éléments de ceux-ci,e dans des dispositifs de manipulation d'articles chauds en verre, en vitrocéramique ou en céramique.

9. Utilisation d'un verre renforcé par fibres ou d'une vitrocéramique renforcée par fibres selon au moins une des revendications 1 à 7, pour le travail ou la mise en forme d'articles en verre ou de paraisons de verre chauds.
